# EUROPEAN PATENT APPLICATION

(11) **EP 4 697 391 A1**
(43) Date of publication of application: **18.02.2026**
(21) Application number: 25195076.2
(22) Date of filing: 11.08.2025
(51) Int. Cl.: H01M 4/04, H01M 4/13, H01M 4/66

(54) **ELECTRODE SHEET, SECONDARY BATTERY AND ELECTRONIC APPARATUS**

(30) Priority: 16.08.2024 CN 202421997268 U
(71) Applicant: AESC Japan Ltd., Yokohama-Shi, Kanagawa 220-0012 (JP)
(72) Inventor: WANG, Yunhui, Jiangyin City, Wuxi City, 214443 (CN)
(74) Representative: Becker, Eberhard

(57) **Abstract**

An electrode sheet (20), a secondary battery (100), and an electronic apparatus (1000) are provided. The electrode sheet includes a current collector (12), a conductive layer (14), an insulating layer (16) arranged on a same surface (12s) of the current collector with the conductive layer spaced apart from the insulating layer in a first direction (X), and an active material layer (18) covering the conductive layer. In the first direction, an edge (18e) of the active material layer facing the insulating layer extends beyond the conductive layer, and a predetermined gap (G2) is provided between the edge of the active material layer and the insulating layer. In the above technical solution, the phenomenon of mutual dissolution and edge bulging between the active material layer and the insulating layer of the electrode sheet is at least avoided, and the quality of the electrode sheet is improved.

## Description

### BACKGROUND

### Technical Field

The disclosure relates to the technical field of batteries, and more specifically, relates to an electrode sheet, a secondary battery, and an electronic apparatus.

### Description of Related Art

In the field of new energy power batteries, the application of secondary batteries is increasing. For instance, secondary batteries (e.g., lithium-ion batteries) can be applied to electronic apparatuses such as vehicles, energy storage, mobile phones, tablets, wearable devices, power banks, electronic cigarettes, digital products, power tools, power devices, energy storage devices, etc. A secondary battery typically includes an outer casing and an electrode assembly. The electrode assembly includes a positive electrode sheet, a first separator, a negative electrode sheet, and a second separator, which are stacked sequentially to form a wound electrode assembly or a stacked electrode assembly and then packaged in the outer casing.

### SUMMARY

In view of the problems found in the related art, the disclosure provides an electrode sheet, a secondary battery, and an electronic apparatus through which the phenomenon of mutual dissolution and edge bulging between an active material layer and an insulating layer of the electrode sheet is at least avoided, and the quality of the electrode sheet is thus improved.

According to an aspect, the disclosure provides an electrode sheet including a current collector, a conductive layer, an insulating layer arranged on a same surface of the current collector with the conductive layer spaced apart from the insulating layer in a first direction, and an active material layer covering the conductive layer. In the first direction, an edge of the active material layer facing the insulating layer extends beyond the conductive layer, and a predetermined gap is provided between the edge of the active material layer and the insulating layer.

In the above technical solution, by having the active material layer cover the edge of the conductive layer close to the insulating layer, the edge of the active material layer close to the insulating layer is directly coated on the current collector. Therefore, during the coating of the active material layer, when a size of the active material layer is monitored, there is no need to rely on the active material layer and the conductive layer with a small color difference therebetween to capture the edge of the active material layer. As such, the edge of the active material layer is effectively captured, the predetermined gap is provided between the active material layer and the insulating layer, the phenomenon of mutual dissolution and edge bulging between the slurry of the active material layer and the insulating layer is effectively avoided, and the quality of the electrode sheet is improved.

Beneficial effects of the disclosure includes the following:

By covering the edge of the conductive layer close to the insulating layer with the active material layer and arranging a gap between the active material layer and the insulating layer, the phenomenon of mutual dissolution and edge bulging between the slurry of the active material layer and the insulating layer is effectively avoided, and the quality of the electrode sheet is improved. The active material layer can be formed by coating, and the edge of the active material layer close to the insulating layer is the edge of the thinned region of the active material layer away from the straight region. Due to the significant color difference between the active material layer and the current collector beneath it, the edge of the active material layer can be accurately captured and monitored by a CCD camera during the coating period of the active material layer. In this way, the control precision of the coating process is improved, and misalignment of the active material layer is prevented. Especially in the case of misalignment of the conductive layer, the misalignment of the active material layer can still be controlled.

### BRIEF DESCRIPTION OF THE DRAWINGS

To make the technical solutions provided in the embodiments of the disclosure or the related art more clearly illustrated, several accompanying drawings required by the embodiments for description are briefly introduced as follows. Obviously, the drawings in the following description are merely some embodiments of the disclosure, and for a person having ordinary skill in the art, other drawings can be obtained based on these drawings without inventive effort.
FIG. 1 is a schematic view illustrating an electronic apparatus taking a vehicle as an example.
FIG. 2 is a three-dimensional view illustrating a secondary battery taking a cylindrical battery as an example according to an embodiment of the disclosure.
FIG. 3 is a cross-sectional view illustrating a secondary battery taking a cylindrical battery as an example according to an embodiment of the disclosure.
FIG. 4 is a three-dimensional view illustrating a secondary battery taking a square-casing battery as an example according to another embodiment of the disclosure.
FIG. 5 is a three-dimensional view illustrating an electrode assembly of the secondary battery taking a square-casing battery as an example according to another embodiment of the disclosure.
FIG. 6 is a schematic view of a structure of an electrode sheet of a secondary battery according to the related art.
FIG. 7 is a schematic cross-sectional view of an electrode sheet according to an embodiment of the disclosure.
FIG. 8 is a schematic top view of the electrode sheet of FIG. 7.

### DESCRIPTION OF THE EMBODIMENTS

The technical solutions in the embodiments of the disclosure will be clearly and completely described below with reference to the accompanying drawings in the embodiments of the disclosure. Obviously, the described embodiments are only a part of the embodiments of the disclosure, but not all of the embodiments. Based on the embodiments of the disclosure, all other embodiments obtained by a person having ordinary skill in the art fall within the protection scope of the disclosure.

The embodiments of this disclosure are to be described in detail in the following paragraphs. Throughout the specification of the disclosure, similar or like components and components with similar or like functions are represented by similar reference numerals. The embodiments related to the drawings described herein are illustrative, graphical, and provided for a basic understanding of the disclosure. The embodiments of the disclosure should not be interpreted as limitations of the disclosure.

As used herein, the terms "substantially", "basically", "essentially", and "approximately" are used to describe and explain small variations. When used together with an event or circumstance, these terms may refer to examples where the event or circumstance occurs precisely as well as examples where the event or circumstance occurs very approximately.

In the specification, unless specifically designated or limited, relative terms such as: "central", "longitudinal", "lateral", "front", "rear", "right", "left", "internal", "external", "lower", "higher", "horizontal", "vertical", "above", "below", "upper", "lower", "top", "bottom", and their derivatives (such as "horizontally", "downwardly", "upwardly", etc.) shall be interpreted as referring to the orientation described in the discussion or shown in the drawings. These relative terms are used only for descriptive convenience and do not require that the disclosure be constructed or operated in a particular direction.

For ease of description, "first", "second", "third", etc. may be used herein to distinguish different components in one figure or a series of figures. "First", "second", "third" etc. are not intended to describe the corresponding components. In addition, the following embodiments in the disclosure and the features in the embodiments may be combined with each other in the case of no conflict. The disclosure is described in detail with reference to the accompanying figures combined with the embodiments.

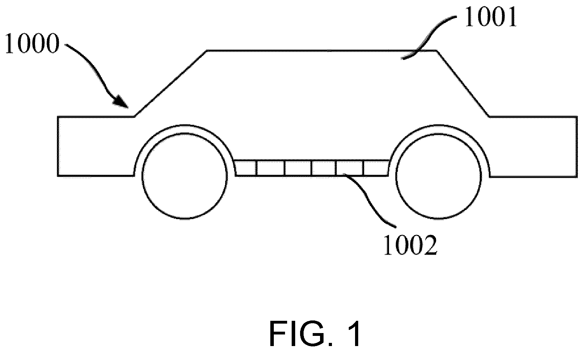

FIG. 1 is a schematic view illustrating an electronic apparatus taking a vehicle 1000 as an example. Referring to FIG. 1, for ease of description, the following embodiments are described by taking the electronic apparatus as the vehicle 1000. However, it is not difficult to understand that the electronic apparatus provided by the disclosure is not limited to a vehicle, and the electrical apparatus may be a vehicle, a mobile phone, a portable device, a notebook computer, a ship, a spacecraft, an electric toy, an electric tool, etc.

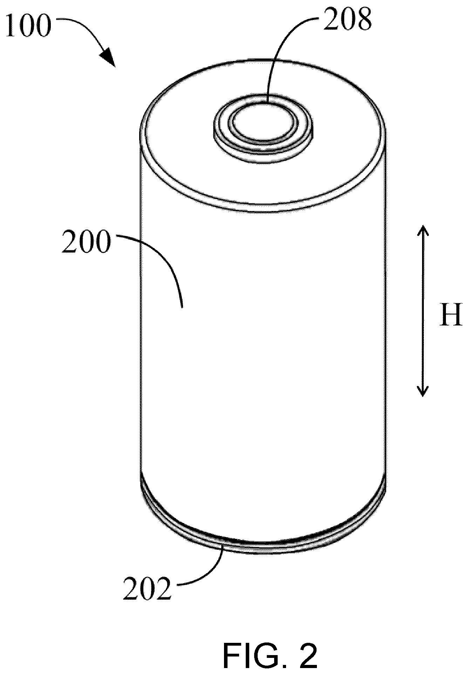

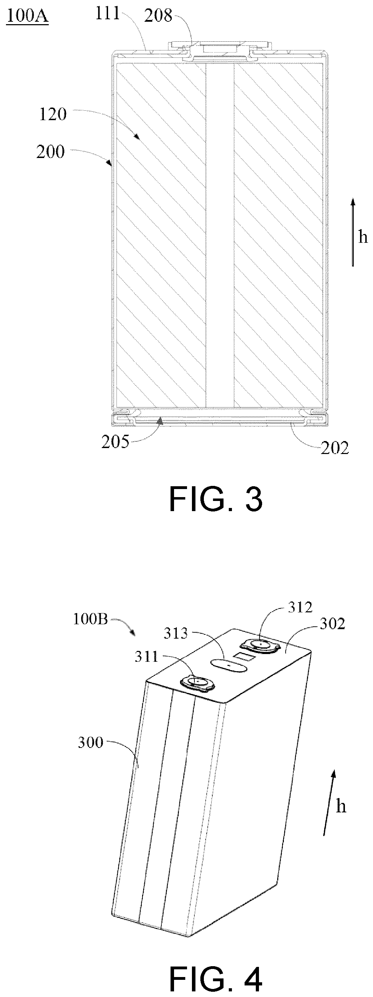

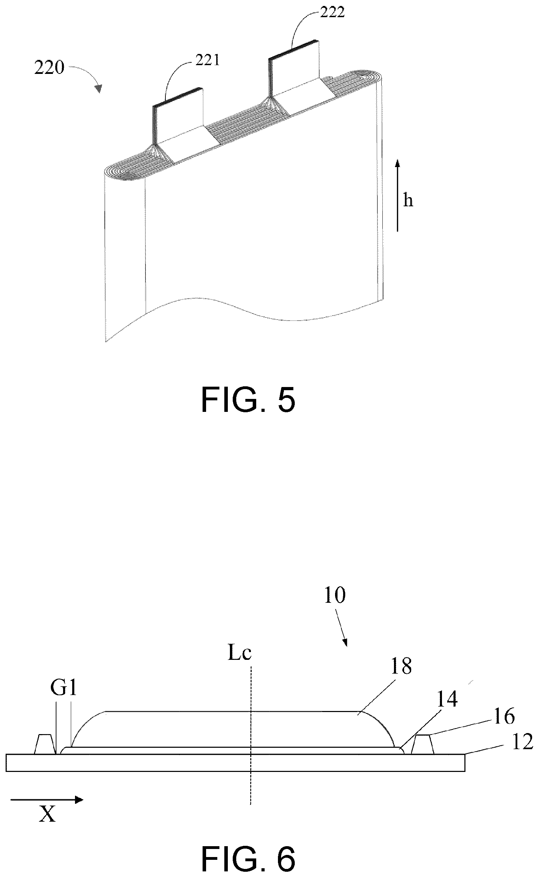

A battery group 1002 may arranged inside the vehicle 1000, and the battery group 1002 may be arranged at a bottom portion (as shown in FIG. 1), a front portion, a tail portion, or any other appropriate position of a vehicle body 1001. The battery group 1002 may be used for power supply to the vehicle 1000, for example, the battery group 1002 may act as an operating power source or a driving power source of the vehicle 1000. The battery group 1002 may include a plurality of secondary batteries (e.g., a secondary battery 100A described in relation to FIG. 2 and FIG. 3 or a secondary battery 100B described in relation to FIG. 4 and FIG. 5) and a box assembly for accommodating the plurality of secondary batteries.

It should be understood that each secondary battery in the disclosure may be a secondary battery of various shapes, for example, it may be cylindrical, flat, rectangular, or other shapes, etc., which is not limited by the embodiments of the disclosure. On the other hand, the secondary battery in the disclosure may be a lithium-ion battery, a lithium-sulfur battery, a sodium-lithium ion battery, a sodium-ion battery, etc., which is not limited by the embodiments of the disclosure, either.

FIG. 2 is a three-dimensional view illustrating the secondary battery 100A according to an embodiment of the disclosure. In the embodiment shown in FIG. 2, the secondary battery 100A is shown as a cylindrical battery as an example. FIG. 3 is a cross-sectional view of the secondary battery 100A according to an embodiment of the disclosure. Referring to FIG. 2 and FIG. 3, the secondary battery 100A may include an electrode assembly 120, an electrolyte, a casing 200, and a cap 202. One end of the casing 200 in a height direction (direction h) may have an opening 205, and the cap 202 is arranged at the opening 205 and seals the accommodating cavity. The casing 200 and the cap 202 are components that accommodate the electrode assembly 120 and the electrolyte together. A material of the casing 200 may be any one of various available materials, such as copper, iron, aluminum, steel, aluminum alloy, etc. The casing 200 may be cylindrical and define an accommodating cavity, with the electrode assembly 120 arranged inside the accommodating cavity. A diameter of the casing 200 may be determined according to a specific size of the electrode assembly 120, such as 18 mm, 21 mm, 46 mm, etc. In some embodiments, the secondary battery 100A may be a 4680 cylindrical battery (diameter 46 mm and height 80 mm), the secondary battery 100A may be a 4695 cylindrical battery (diameter 46 mm and height 95 mm), or the secondary battery 100A may be a 46120 cylindrical battery (diameter 46 mm and height 120 mm).

The casing 200 may be connected to a negative terminal of the electrode assembly 120. The secondary battery 100A may also have a terminal post 208 at one end opposite to the cap 202, and the terminal post 208 may be connected to a positive terminal of the electrode assembly 120. It should be understood that the terminal post 208 and the casing 200 are in an insulated fitting state to avoid battery short circuit.

In some embodiments, the electrode assembly 120 may include a first electrode sheet, a first separator, a second electrode sheet, and a second separator stacked in sequence. In this embodiment, the stacked first electrode sheet, first separator, second electrode sheet, and second separator may be wound to form the cylindrical electrode assembly 120. The electrode assembly 120 has a first tab and a second tab arranged at both ends in the height direction h of the secondary battery 100. The electrolyte may be located among the first electrode sheet, the first separator, the second electrode sheet, and the second separator. In some embodiments, the first electrode sheet is a positive electrode sheet, and the second electrode sheet is a negative electrode sheet. In some embodiments, a positive tab faces the end wall 111 and is electrically connected to the terminal post 208, making the terminal post 208 positively charged, and a negative tab faces the opening 205, and the casing 200 is electrically connected to the negative tab so as to be negatively charged.

FIG. 4 is a three-dimensional view illustrating the secondary battery 100B taking a square-casing battery as an example according to another embodiment of the disclosure. FIG. 5 is a three-dimensional view illustrating an electrode assembly of the secondary battery 100B taking a square-casing battery as an example according to another embodiment of the disclosure. In FIG. 4 and FIG. 5, the secondary battery 100B is a square-casing battery. Referring to FIG. 2 and FIG. 3, the secondary battery 100B may include an electrode assembly 220, an electrolyte, a casing 300, and a cover plate assembly 302. The casing 300 may be in the form of a flat rectangular prism. The casing 300 may have an opening (not shown) at one end in the height direction h, and the cover plate assembly 302 is arranged at the opening. The cover plate assembly 302 is provided with a first terminal post 311, a second terminal post 312, and an explosion-proof valve 313. In some embodiments, the first terminal post 311 and the second terminal post 312 are treated as a positive terminal post and a negative terminal post, respectively.

In some embodiments, the electrode assembly 220 may include a first electrode sheet, a first separator, a second electrode sheet, and a second separator stacked in sequence. In some embodiments, the first electrode sheet is a positive electrode sheet, and the second electrode sheet is a negative electrode sheet. The electrolyte may be located among the first electrode sheet, the first separator, the second electrode sheet, and the second separator. In this embodiment, the stacked first electrode sheet, first separator, second electrode sheet, and second separator may be wound to form a flat rectangular prismatic electrode assembly 220. The electrode assembly 220 has a first tab 221 and a second tab 222 arranged at a same end in the height direction h of the secondary battery 100B. In some embodiments, the first tab 221 and the second tab 222 face the cover plate assembly 302, and the first tab 221 and the second tab 222 are electrically connected to the corresponding first terminal post 311 and second terminal post 312, respectively, thereby making the first terminal post 311 and the second terminal post 312 positively or negatively charged accordingly.

The positive electrode sheet in the secondary battery (e.g., the secondary batteries 100A and 100B) may include a positive current collector and a positive active material layer coated on both surfaces of the positive current collector. A portion of the positive current collector not coated with the positive active material layer constitutes the positive tab. The negative electrode sheet may include a negative current collector and a negative active material layer coated on both surfaces of the negative current collector. A portion of the negative current collector not coated with the negative active material layer constitutes the negative tab. Taking a lithium-ion battery as an example, a material of the positive current collector may be aluminum, the positive active material layer may include a positive active material, and the positive active material may be lithium cobalt oxide, lithium iron phosphate, ternary lithium, or lithium manganese oxide, etc. A material of the negative current collector may be copper, the negative active material layer may include a negative active material, and the negative active material may be carbon or silicon, etc. In some embodiments, a material of the first separator and the second separator may be, for example, polypropylene (PP) or polyethylene (PE), etc. A material of the current collector is aluminum, and the active material layer includes a phosphate positive electrode material.

In addition, in order to prevent short circuits between the positive electrode sheet and the negative electrode sheet, an insulating material is coated most of the time near an edge of the positive active material layer of the positive electrode sheet or the negative active material layer of the negative electrode sheet to form an insulating layer.

A structure of a positive electrode sheet or a negative electrode sheet (hereinafter may be collectively referred to as electrode sheet) of a secondary battery of the related art is shown in FIG. 6. Referring to FIG. 6, in a preparation process of the electrode sheet 10, a current collector 12 with a conductive layer 14 is provided first, then an insulating layer 16 and an active material layer 18 are coated together. After the insulating layer 16 and the active material layer 18 are coated, cutting is performed along a line Lc to obtain the electrode sheet 10. The obtained electrode sheet 10 may include the current collector 12, the conductive layer 14 and the insulating layer 16 spaced apart on the current collector 12, and the active material layer 18 arranged on the conductive layer 14. The active material layer 18 is entirely located on the conductive layer 14, and a size of the conductive layer 14 in a first direction X is greater than that of the active material layer 18.

In the above preparation process of the electrode sheet 10, the coating of the insulating layer 16 and the active material layer 18 are carried out together. After a slurry of the insulating layer 16 and a slurry of the active material layer 18 are bonded to the current collector 12, due to the large difference in interfacial tension, the two slurries are prone to mutual dissolution and edge bulging, resulting in the quality of the electrode not meeting the design needs. Further, due to the precision of processing equipment, when the conductive layer 14 is coated on the current collector 12, there may be a certain misalignment on both sides of the conductive layer 14 in the first direction X, so that the active material layer 18 coated on the conductive layer 14 is misaligned as well. In addition, in the electrode sheet 10 of the related art, a gap G1 between the active material layer 18 and the insulating layer 16 consists of the conductive layer 14 and the blank current collector 12. Since the size of the conductive layer 14 is greater than that of the active material layer 18, and typically the color difference between the conductive layer 14 and the active material layer 18 is small, and image monitoring equipment (e.g., a CCD camera) of the related art cannot effectively capture the edge of the active material layer 18. As such, the size of the active material layer 18 and the gap G1 between the active material layer 18 and the insulating layer 16 cannot be effectively monitored.

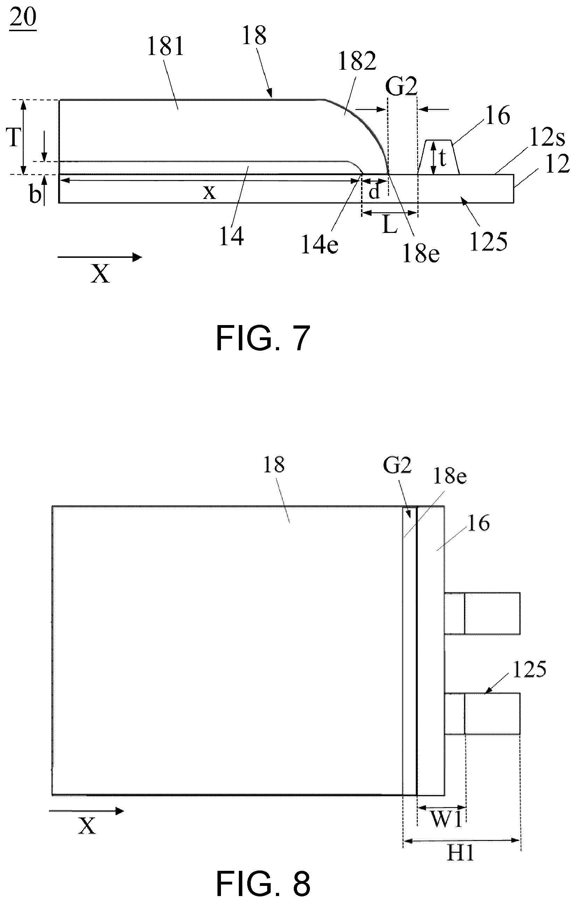

FIG. 7 is a schematic cross-sectional view of an electrode sheet 20 according to an embodiment of the disclosure. FIG. 8 is a schematic top view of the electrode sheet 20 of FIG. 7. With reference to FIG. 7 and FIG. 8, the electrode sheet 20 may include the current collector 12, the conductive layer 14, and the insulating layer 16, with the insulating layer 16 and the conductive layer 14 spaced apart in the first direction X on a same surface 12s of the current collector 12. The conductive layer 14 and the insulating layer 16 may be directly coated on the surface 12s of the current collector 12. The current collector 12 is a component that may be used to collect current, its function may be to collect the newly generated current from the active material in the battery to form a larger current for external output, Therefore, the current collector 12 generally uses a metal material with the lowest possible internal resistance, such as aluminum or copper. The current collector 12 is generally a metal foil. In some embodiments, when the electrode sheet 20 is a positive electrode sheet, the current collector 12 may be aluminum foil, and when the electrode sheet 20 is a negative electrode sheet, the current collector 12 may be copper foil.

The electrode sheet 20 may also include the active material layer 18, with the active material layer 18 covering the conductive layer 14. In the first direction X, an edge 18e of the active material layer 18 facing the insulating layer 16 extends beyond the conductive layer 14. A portion of the active material layer 18 that extends beyond the conductive layer 14 may directly cover the current collector 12. A predetermined gap G2 is provided between the edge 18e of the active material layer 18 and the insulating layer 16.

In the above technical solution, by having the active material layer 18 cover the edge of the conductive layer 14 close to the insulating layer 16, the edge of the active material layer 18 close to the insulating layer 16 is directly coated on the current collector 12. Therefore, during the coating of the active material layer 18, when a camera monitors the size of the active material layer 18 (for example, through a charge coupled device (CCD)), there is no need to rely on the active material layer 18 and the conductive layer 14 with a small color difference therebetween to capture the edge of the active material layer 18. As such, the edge of the active material layer 18 can be effectively captured, the predetermined gap G2 is provided between the active material layer 18 and the insulating layer 16, the phenomenon of mutual dissolution and edge bulging between the slurry of the active material layer 18 and the insulating layer 16 can be effectively avoided, and the quality of the electrode sheet is improved.

In some embodiments, the insulating layer and the conductive layer are formed before the active material layer is formed. Specifically, in the process of forming the electrode sheet 20, the conductive layer 14 and the insulating layer 16 are coated before the active material layer 18. Specifically, the process of forming the electrode sheet 20 may include that the conductive layer 14 and the insulating layer 16 are coated on the current collector 12. After the conductive layer 14 and the insulating layer 16 are formed, the active material layer slurry is coated on the conductive layer 14 on the current collector 12, and the active material layer slurry forms the active material layer 18 after drying. In this process, since the insulating layer 16 is formed in advance, rather than coating the insulating layer 16 and the active material layer 18 together, when the active material layer 18 is coated, it is only necessary to monitor the edge flow of the active material layer 18 to control the predetermined gap G2 between the active material layer 18 and the insulating layer 16. In this way, effective control of the size of the active material layer 18 and the gap G2 can be achieved, and the problems of mutual dissolution and edge bulging that may easily occur between the slurry of the active material layer 18 and the slurry of the insulating layer 16 can be effectively avoided.

The conductive layer 14 includes a conductive agent and a binder. The conductive agent includes one or more selected from a group consisting of acetylene black, carbon fiber, conductive carbon black, conductive graphite, single-walled carbon nanotubes, multi-walled carbon nanotubes, graphene nanosheets, graphene oxide nanosheets, and micronized graphite. The binder includes one or more selected from a group consisting of polyvinylidene fluoride (PVDF), polyacrylonitrile, styrene-butadiene rubber, polyvinyl alcohol, gum arabic, xanthan gum, and polyacrylate.

The insulating layer 16 may include an organic material. In some embodiments, the insulating layer 16 includes one or a mixture of two or more selected from a group consisting of butyl acrylate, styrene, acrylic acid, hydroxyethyl acrylate, and styrene-butadiene rubber (SBR). The optional substances for the above insulating layer may be an aqueous solution with 10 weight percent to 90 weight percent dispersed in water. In some other embodiments where the insulating layer 16 includes an organic material, the insulating layer 16 includes an insulating material and a binder. The binder includes at least one of polyvinylidene fluoride, polyurethane, sodium polyacrylate, styrene-butadiene rubber, polyetherimide, carboxymethyl cellulose, and acrylate. The insulating material includes at least one of Al₂O₃, BaSO₄, CaSiO₃, γ-AlOOH, CaSiO₄, and polytetrafluoroethylene.

In some embodiments, the electrode sheet 20 is a positive electrode sheet. In the embodiments where the electrode sheet 20 is a positive electrode sheet, the material of the current collector 12 may be aluminum. The active material layer 18 of the positive electrode sheet is preferably a phosphate material, because this type of phosphate material is more likely to shrink due to the surface tension with the insulating layer. Through the design of the predetermined gap G2 of the disclosure, the mutual dissolution between the active material layer of the positive electrode sheet and the insulating layer can be avoided, so this problem can be solved.

The active material layer 18 may specifically include a straight region 181 and a thinned region 182 connected to one end of the straight region 181 in the first direction X, and the thinned region 182 is located at one end of the straight region 181 close to the insulating layer 16. The edge 18e of the active material layer 18 close to the insulating layer 16 is the edge of the thinned region 182 away from the straight region 181. That is, the edge 18e of the active material layer 18 close to the insulating layer 16 is the edge of the thinned region 182 formed through the coating process. In this way, a gap can be provided between the thinned region 182 and the insulating layer 16, and the problem of mutual dissolution and edge bulging between the slurry of the active material layer 18 and the slurry of the insulating layer 16 can be safely and effectively avoided.

In the embodiments that is shown, an edge 14e of the conductive layer 14 that is close to the insulating layer 16 is covered by the thinned region 182. In other embodiments, the edge 14e of the conductive layer 14 may also be covered by the straight region 181, while the thinned region 182 may be located in the gap between the conductive layer 14 and the insulating layer 16.

In some embodiments, a color of the active material layer 18 is different from that of the current collector 12. It should be understood that the different colors in the disclosure refer to color differences that can be accurately identified by a CCD camera for edge capturing. For instance, the color of the active material layer 18 is typically black, while the color of the current collector 12 may typically be white. Due to the significant color difference between the active material layer 18 and the current collector 12 beneath it, the edge 18e of the active material layer 18 may be accurately captured and monitored by a CCD camera during the coating period of the active material layer 18. In this way, the control precision of the coating process is improved, and misalignment of the active material layer 18 is prevented.

In some embodiments, an identifiable color difference between the active material layer 18 and the current collector 12 is greater than an identifiable color difference between the active material layer 18 and the conductive layer 14. For instance, both the active material layer 18 and the conductive layer 14 are typically black in color. As described above with reference to FIG. 6, when there is a small color difference between the active material layer 18 and the conductive layer 14, it is difficult to capture the edge 18e when the active material layer 18 is coated. In the disclosure, the edge 18e of the active material layer 18 is extended onto the current collector 12 where the identifiable color difference is greater. Since the edge 18e of the active material layer 18 is directly coated on the current collector 12, there is no need to rely on the active material layer 18 and the conductive layer 14 with a small color difference therebetween to capture the edge 18e of the active material layer 18. Therefore, the edge 18e may be effectively captured, and the control precision of the coating process of the active material layer 18 is improved. Due to the improved control precision of the coating of the active material layer 18, misalignment of the active material layer 18 can be avoided, especially even in the case of misalignment of the conductive layer 14, the active material layer 18 can be controlled to prevent misalignment.

In some embodiments, the conductive layer 14 may be a carbon coating layer. In some embodiments, a thickness b µm of the conductive layer 14 may satisfy 0 µm <b µm≤1.5 µm. If the thickness b µm of the conductive layer 14 is greater than 1.5 µm, it may cause a reduction in an overall thickness of the active material layer 18, so that the energy density of the battery may be reduced.

In some embodiments, a distance L mm between the insulating layer 16 and the conductive layer 14 satisfies x/2-0.5 mm<L mm<x/2+0.5 mm, where x represents a width of the conductive layer 14 coated on the current collector 12 in the first direction X, in mm. If the distance L mm between the conductive layer 14 and the insulating layer 16 is excessively small, it may be unfavorable for coating the edge of the active material layer 18 between the conductive layer 14 and the insulating layer 16. If the distance L mm between the conductive layer 14 and the insulating layer 16 is excessively large, an exposed portion of the current collector 12 may be excessively large, so the utilization rate of the current collector is wasted.

In some embodiments, a size range of the gap G2 between the active material layer 18 and the insulating layer 16 in the first direction X is 1/3 to 2/3 of the distance L mm (i.e., 1/3L mm to 2/3L mm). Such a range of the gap G2 can ensure that the edge of the active material layer 18 can be coated onto the current collector 12 within the process error range of the coating equipment, and the gap G2 can be maintained between the active material layer 18 and the insulating layer 16. In some embodiments, in the first direction X, a width of the active material layer 18 coated on the current collector 12 is d mm, and the width d mm may be equal to a total width of the active material layer 18 minus x. In some embodiments, 0<d mm≤5 mm.

In some embodiments, a thickness of the insulating layer 16 is t µm, a thickness of the active material layer 18 is T µm, and the thickness t µm of the insulating layer 16 satisfies T µm/t µm>2. If the thickness of the insulating layer 16 is excessively small, the insulating layer 16 may not provide insulation protection. If the thickness of the insulating layer 16 is excessively large, a portion of the current collector 12 covered by the insulating layer 16 may not be easily bent, which is unfavorable for applying the electrode sheet, for example, a cylindrical battery. On the other hand, if the thickness of the active material layer 18 is excessively small, the energy density of the battery may be reduced. By reasonably setting the thickness of the insulating layer 16 and the active material layer 18, favorable results can be achieved in ensuring that the insulating layer 16 provides insulation protection, the current collector 12 is easily bent, and the energy density of the battery is ensured.

In some embodiments, the current collector 12 may include a tab 125 protruding from the active material layer 18 in the first direction X. The tab 125 has a height H1 in the first direction X, and the insulating layer 16 has a width W1 in the first direction X, where the width W1 may be less than 1/3 of the height H1. Since the predetermined gap G2 can be effectively provided between the active material layer 18 and the insulating layer 16, a wide coating of the insulating layer 16 may be implemented, so that the width W1 of the insulating layer 16 may be allowed to increase to 1/3 of the height H1 of the tab 125.

In some embodiments, when the electrode sheet 20 is for a cylindrical battery, the first direction X may correspond to the height direction h of the cylindrical battery in FIG. 2. In some embodiments, when the electrode sheet 20 is for a square-casing battery, the first direction X may correspond to the height direction h of the square-casing battery in FIG. 4.

The embodiments of the disclosure further provide a secondary battery (e.g., the secondary battery 100A described with reference to FIG. 2 and FIG. 3 and the secondary battery 100B described with reference to FIG. 4 and FIG. 5). The secondary battery may include a casing having an opening and used to accommodate an electrode assembly and a cap for sealing the opening. The electrode assembly includes the electrode sheet 20 of the aforementioned embodiments.

The embodiments of the disclosure further provide an electronic apparatus including the secondary battery of the aforementioned embodiments. The electronic apparatus may be, for example, the vehicle 1000 described with reference to FIG. 1.

## Claims

1. An electrode sheet (20), comprising:
a current collector (12);
a conductive layer (14);
an insulating layer (16), arranged on a same surface (12s) of the current collector (12) with the conductive layer (14) spaced apart from the insulating layer (16) in a first direction (X); and
an active material layer (18) covering the conductive layer (14),
wherein, in the first direction (X), an edge (18e) of the active material layer (18) facing the insulating layer (16) extends beyond the conductive layer (14), and a predetermined gap (G2) is provided between the edge (18e) of the active material layer (18) and the insulating layer (16).

2. The electrode sheet (20) according to claim 1, wherein
a distance (L) between the insulating layer (16) and the conductive layer (14) is L mm, satisfying: x/2-0.5 mm<L mm < x/2+0.5 mm, where x represents a width (x) of the conductive layer (14) coated on the current collector (12) in the first direction (X), in mm.

3. The electrode sheet (20) according to claim 2, wherein
a size of the gap (G2) in the first direction (X) ranges from 1/3L mm to 2/3L mm.

4. The electrode sheet (20) according to claim 1, wherein
a thickness (t) of the insulating layer (16) is t µm, satisfying T µm/t µm>2, where T µm represents a thickness (T) of the active material layer (18).

5. The electrode sheet (20) according to claim 1, wherein
the current collector (12) comprises a tab (125) protruding from the active material layer (18) in the first direction (X), and the tab (125) has a height (H1) in the first direction (X),
the insulating layer (16) has a width (W1) in the first direction (X), wherein the width (W1) is less than 1/3 of the height (H1).

6. The electrode sheet (20) according to claim 1, wherein
a color of the active material layer (18) is different from that of the current collector (12), or
an identifiable color difference between the active material layer (18) and the current collector (12) is greater than an identifiable color difference between the active material layer (18) and the conductive layer (14).

7. The electrode sheet (20) according to claim 1, wherein
the active material layer (18) comprises a straight region (181) and a thinned region (182) connected to one end of the straight region (181) in the first direction (X), wherein the thinned region (182) is located at one end of the straight region (181) close to the insulating layer (16).

8. The electrode sheet (20) according to claim 1, wherein
the insulating layer (16) and the conductive layer (14) are formed before the active material layer (18) is formed, a material of the current collector (12) is aluminum, and the active material layer (18) comprises a phosphate positive electrode material.

9. A secondary battery (100), comprising:
a casing (200, 300) having an opening (205) for accommodating an electrode assembly (120, 220); and
a cap (202, 302) configured to seal the opening (205), wherein the electrode assembly (120, 220) comprises the electrode sheet (20) according to any one of claims 1 to 8.

10. An electronic apparatus (1000) comprising the secondary battery (100) according to claim 9.
